# EUROPÄISCHE PATENTSCHRIFT

(11) **EP 1 985 845 B1**
(45) Veröffentlichungstag und Bekanntmachung des Hinweises auf die Patenterteilung: **22.06.2011**
(21) Anmeldenummer: 07008467.8
(22) Anmeldetag: 26.04.2007
(51) Int. Cl.: F03D 1/00, F03D 11/00, F03D 11/04, B63B 21/00, E02B 17/00, H02G 1/10

(54) **Gründung für eine Offshore-Windenergieanlage mit mindestens einer Seekabeldurchführung**
Foundation for an offshore wind farm with at least one sea cable feedthrough
Fondation pour une installation à énergie éolienne offshore dotée d'au moins une réalisation de câble sous-marin

(43) Veröffentlichungstag der Anmeldung: 29.10.2008
(73) Patentinhaber: BARD Holding GmbH, 26725 Emden (DE)
(72) Erfinder: Bekker, Arngolt, 28355 Bremen (DE)
(74) Vertreter: Manasse, Uwe

(56) Entgegenhaltungen:
- WO-A-00/36724
- WO-A-00/39903
- DE-A1- 10 223 314
- DE-A1-102004 042 066
- FR-A- 2 818 327

## Beschreibung

Eine Offshore-Windenergieanlage mit mindestens einer Seekabeldurchführung. Bei dem Seekabel kann es sich zum Beispiel um ein Hochspannungs- oder Mittelspannungskabel handeln. In den meisten Offshore-Windparks werden Seekabel außerhalb einer Gründung mit Hilfe von sogenannten J-Tubes verlegt. J-Tubes sind Stahlrohre zum Schutz der Seekabel, die die Seekabel auf dem Weg zu der Schaltanlage, die sich in dem Turm der Windenergieanlage befindet, schützen sollen.

Dadurch sind jedoch die Seekabel in großem Maße den Naturgewalten ausgesetzt und, wie die Erfahrungen zeigen, werden gerade in dem Bereich oft beschädigt. Die Reparaturen im Offshore-Bereich sind jedoch sehr teuer und aufwendig.

In der letzten Zeit wurden daher bereits in Einzelfällen Seekabel innerhalb der Gründung ebenfalls in J-Tubes verlegt. Die Seekabeleinführung erfolgte dabei auf der Ebene des Meeresbodens oder in einer Höhe von 0,5m. Dies weist den Nachteil auf, daß im Bereich des Meeresbodens an der Gründung besonders starke Schwankungen auftreten, die wiederum die Seekabel belasten und am Ende zu einer Beschädigung derselben führen. Außerdem brauchen die Seekabel an dieser Stelle einen sehr starken Schutz, wie zum Beispiel Steine, geotextile Matten, etc., vor einer möglichen Auskolkung.

Eine solche Gründung wird beispielsweise inder WO 00/39903 gezeigt.

Der Erfindung liegt somit die Aufgabe zugrunde, die bekannte Gründung derart weiterzubilden, daß die Seekabel gar nicht oder nur in einem geringen Umfang beschädigt werden können.

Erfindungsgemäß wird diese Aufgabe bei der Gründung der eingangs genannten Art dadurch gelöst, daß sich die Seekabeldurchführung in einer Höhe im Bereich von ca. 3,5 bis ca. 5 m über dem Meeresboden befindet.

Vorteilhafterweise ist die Seekabeldurchführung zur Einführung eines Seekabels unter einem Winkel im Bereich von ca. 30° bis ca. 45°, vorzugsweise von ca. 40°, zur Gründung von der Seite des Meeresbodens schräg nach oben gestaltet.

Günstigerweise ist in der Gründung ein zur Durchführung eines Seekabels bestimmter ovaler oder ovalartiger Wanddurchbruch vorgesehen. Beispielsweise kann die Gestalt des Wanddurchbruches auch einem Rechteck mit abgerundeten Ecken entsprechen. Durch die spezielle Gestalt des Wanddurchbruchs wird die Statik der Gründung nur wenig beeinträchtigt.

Weiterhin kann vorgesehen sein, daß in dem Wanddurchbruch ein, vorzugsweise rundes, Rohr befestigt ist.

Günstigerweise erstreckt sich das Rohr unter einem Winkel von ca. 40° zur Gründung von der Seite des Meeresbodens schräg nach oben durch den Wanddurchbruch.

Vorteilhafterweise ist in der außerhalb der Gründung befindlichen Öffnung des Rohres eine Einklinkeinrichtung zum Einklinken einer Seekabeleinführung vorgesehen.

Insbesondere kann dabei vorgesehen sein, daß die Einklinkeinrichtung eine umlaufende Innennut aufweist.

Gemäß einer weiteren besonderen Ausführungsform der Erfindung ist das Rohr aus Gußeisen.

Weiterhin kann vorgesehen sein, daß die Gründung eine Monopile-Gründung ist.

Andererseits ist auch denkbar, daß sie eine Tripod-Gründung ist. Andererseits kann es sich beispielsweise auch um eine Gründung gemäß der DE 10 2004 042 066 B4 handeln.

Desweiteren liefert die vorliegende Erfindung eine Gründung für eine Windenergieanlage mit mindestens einer Seekabeldurchführung, nach einem der Ansprüche 1 bis 10, dadurch gekennzeichnet, daß das Seekabel innerhalb der Gründung mittels einer Zugentlastungs-Klemme im oberen Bereich der Gründung und mindestens einer Seekabelhalteklemme in einer Befestigungsplatte verlegt ist. Dies ermöglicht eine J-Tube-lose Seekabelverlegung. Deren Vorteil liegt in der Kostenreduzierung bzw. in der Erhöhung der Wirtschaftlichkeit.

Der Erfindung liegt die überraschende Erkenntnis zugrunde, daß durch die Seekabeldurchführung in einer Höhe im Bereich von ca. 3,5 bis ca. 5 m die Seekabel weniger leicht beschädigt werden können und zumindest im Normalfall von zusätzlichem Schutz abgesehen werden kann.

Weitere Merkmale und Vorteile der Erfindung ergeben sich aus den Ansprüchen und der nachstehenden Beschreibung, in der ein Ausführungsbeispiel anhand der schematischen Zeichnungen im einzelnen erläutert ist. Dabei zeigt:
- Figur 1: eine Seitenansicht teilweise im Schnitt vom unteren Bereich einer Gründung einer Offshore-Windenergieanlage gemäß einer besonderen Ausführungsform der vorliegenden Erfindung;
- Figur 2: eine Detailansicht von Figur 1 teilweise im Schnitt;
- Figur 3: eine Schnittansicht durch einen oberen Teil der Gründung von Figur 1;
- Figur 4: eine Schnittansicht und eine perspektivische Ansicht schräg von oben von einer Zugentlastungs-Klemme und
- Figur 5: eine Seekabelhalteklemme in Seitenansicht.

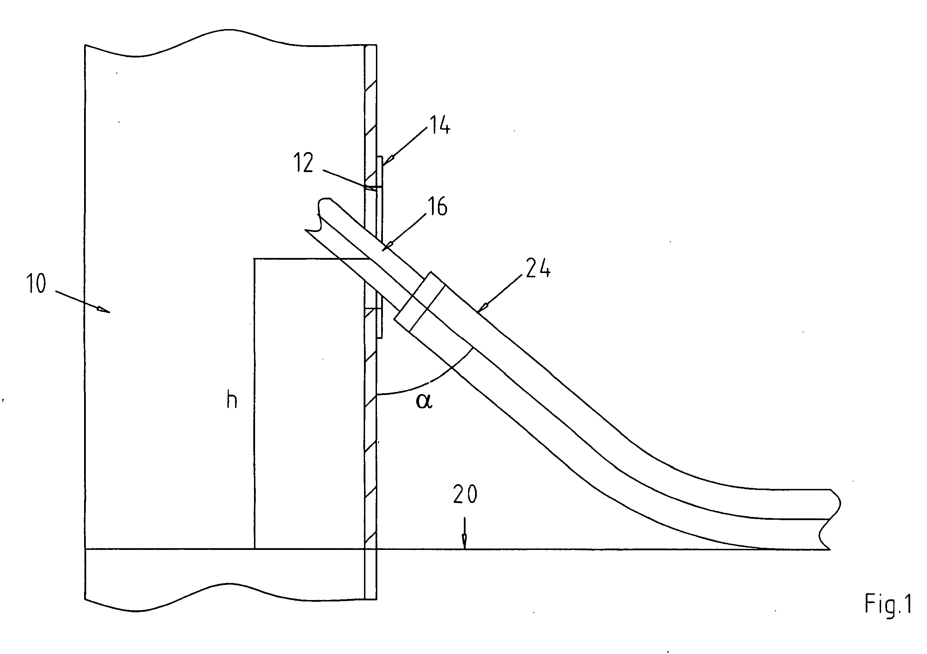

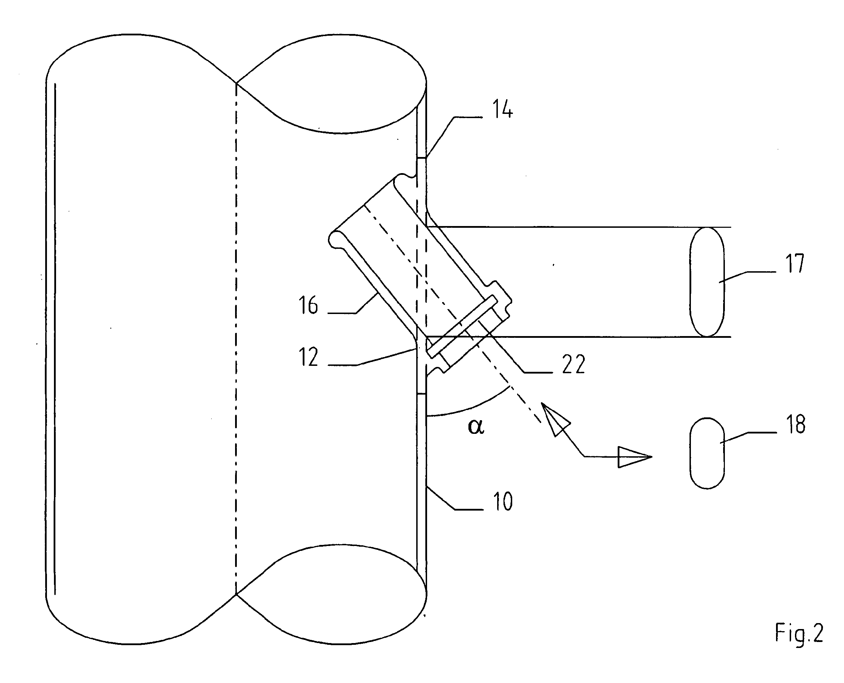

Figur 1 zeigt einen Gründungspfahl 10, der auch als Pile bezeichnet wird, einer Gründung, die zum Beispiel drei Gründungspfähle aufweisen kann. Der Gründungspfahl 10 ist ein Stahlrohr, in dessen Wand ein in vertikaler Richtung ovaler Wanddurchbruch 12 vorgesehen ist (siehe Figur 2). In dem Wanddurchbruch 12 ist eine Dichtungsplatte 14, zum Beispiel durch Schweißen, befestigt, durch die sich ein Rohr 16 mit einem ovalen Querschnitt 17 und daher einer außerhalb des Gründungspfahls 10 befindlichen ovalen Öffnung 18 unter einem Winkel α von ca. 40 ° zur Gründung von der Seite des Meeresbodens schräg nach oben erstreckt. Der Wert des Winkels α hängt von den zulässigen Biegeradien des Seekabels ab, das durch das Rohr 14 gezogen wird. Innerhalb der Öffnung 18 befindet sich eine umlaufende Innennut 22 (siehe Figur 2) zum Einklinken einer Seekabeleinführung (nicht gezeigt). Das Rohr 16 befindet sich in einer Höhe h von ca. 4,5 m über dem Meeresboden 20. Das Seekabel 24 wird dadurch außerhalb des eigentlichen Gefahrenbereiches in den Gründungspfahl 10 eingeführt.

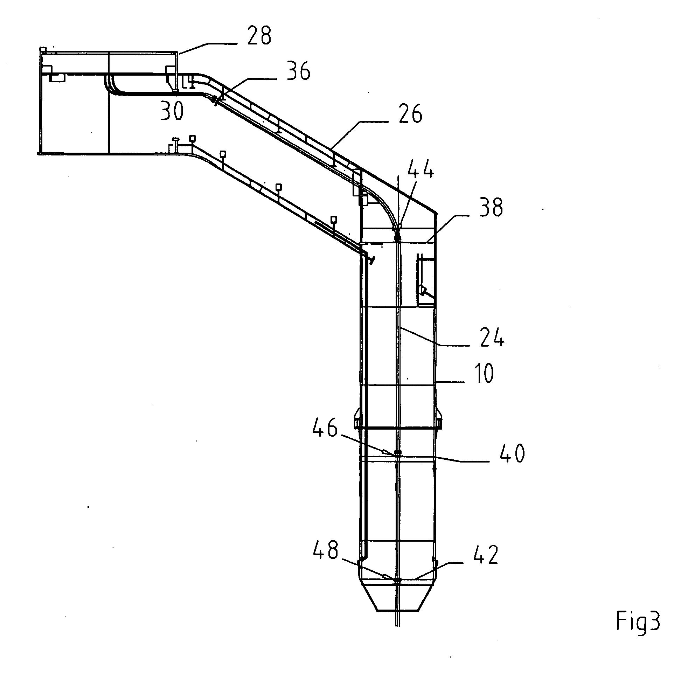

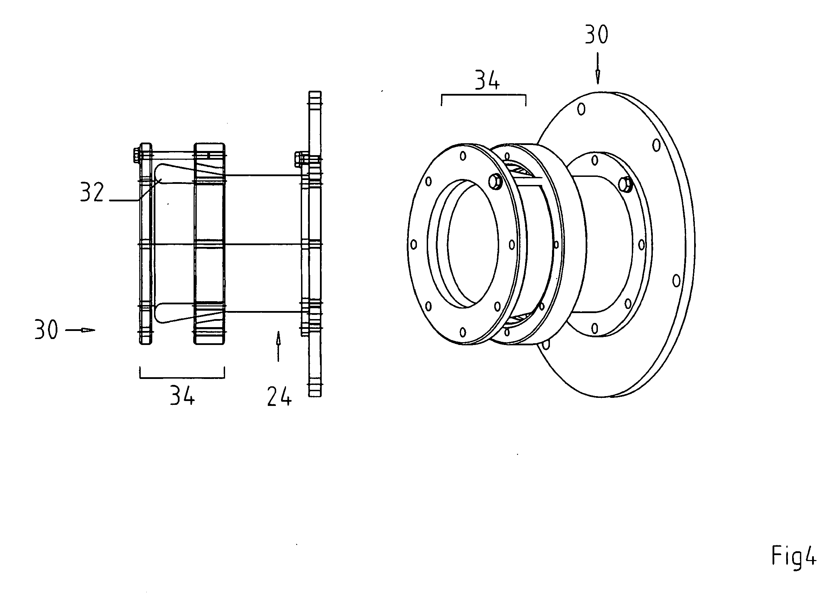

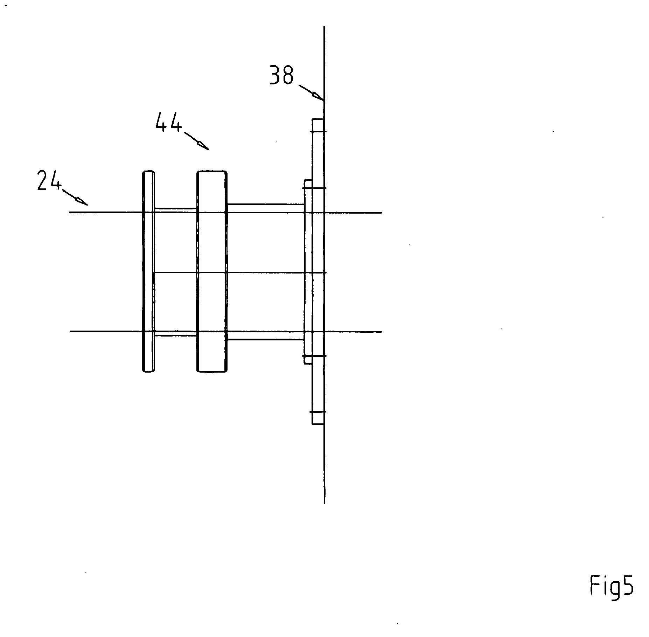

Figur 3 zeigt die Fortsetzung des Gründungspfahls 10 von Figur 1 im oberen Bereich. An dem Gründungspfahl 10 schließt sich oben ein schräg verlaufendes Stahlrohr 26 an, das in dem Turm 28, wo später auch die Schaltanlage zum Anschließen von Seekabeln steht, endet. In dem Stahlrohr 28 ist das Seekabel 24 im oberen Bereich mittels einer an sich bekannten Zugentlastungs-Klemme 30 gesichert. Dazu ist die Armierung 32 des Seekabels 24 in einer Klemmanordnung 34 gesichert (siehe Figur 4). Die Zugentlastungs-Klemme 30 ist wiederum an einer Befestigungsplatte 36 befestigt, die im Inneren des Stahlrohres 26 befestigt ist. In dem Gründungspfahl 10 sind drei Befestigungsplatten 38, 40, 42 im Abstand zueinander und in horizontaler Anordnung befestigt. Durch die Mitte der Befestigungsplatten 38, 40 und 42 erstreckt sich das Seekabel 24, wobei es durch jeweilige Seekabelhalteklemmen 44, 46 und 48 (siehe Figur 5) geklemmt wird.

Die in der vorstehenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Gründung für eine Offshore-Windenergieanlage mit mindestens einer Seekabeldurchführung, **dadurch gekennzeichnet, daß** sich die Seekabeldurchführung in einer Höhe h im Bereich von ca. 3,5 bis ca. 5 m über dem Meeresboden (20) befindet.

2. Gründung nach Anspruch 1, **dadurch gekennzeichnet, daß** die Seekabeldurchführung zur Einführung eines Seekabels (24) unter einem Winkel α von ca. 40 ° zur Gründung von der Seite des Meeresbodens (20) schräg nach oben gestaltet ist.

3. Gründung nach Anspruch 1 oder 2, **dadurch gekennzeichnet, daß** in der Gründung ein zur Durchführung eines Seekabels (24) bestimmter ovaler oder ovalartiger Wanddurchbruch (12) vorgesehen ist.

4. Gründung nach Anspruch 2, **dadurch gekennzeichnet, daß** in dem Wanddurchbruch (12) ein, vorzugsweise rundes, Rohr (16) befestigt ist.

5. Gründung nach Anspruch 4, **dadurch gekennzeichnet, daß** sich das Rohr (16) unter einem Winkel α im Bereich von ca. 30° bis ca. 45°, vorzugsweise von ca. 40°, zur Gründung von der Seite des Meeresbodens (20) schräg nach oben durch den Wanddurchbruch (12) erstreckt.

6. Gründung nach Anspruch 4 oder 5, **dadurch gekennzeichnet, daß** in der außerhalb der Gründung befindlichen Öffnung (18) des Rohres (16) eine Einklinkeinrichtung zum Einklinken einer Seekabeleinführung vorgesehen ist.

7. Gründung nach Anspruch 6, **dadurch gekennzeichnet, daß** die Einklinkeinrichtung eine umlaufende Innennut (22) aufweist.

8. Gründung nach einem der Ansprüche 5 bis 7, **dadurch gekennzeichnet, daß** das Rohr (16) aus Gußeisen besteht.

9. Gründung nach einem der vorangehenden Ansprüche, **dadurch gekennzeichnet, daß** sie eine Monopile-Gründung ist.

10. Gründung nach einem der Ansprüche 1 bis 8, **dadurch gekennzeichnet, daß** sie eine Tripod- oder Tripile-Gründung ist.

11. Gründung für eine Offshore-Windenergieanlage mit mindestens einer Seekabeldurchführung, nach einem der vorangehenden Ansprüche, **dadurch gekennzeichnet, daß** das Seekabel (24) innerhalb der Gründung mittels einer Zugentlastungs-Klemme (30) im oberen Bereich der Gründung und mindestens einer Seekabelhalteklemme (44, 46, 48) in einer Befestigungsplatte (38, 40, 42) verlegt ist.

## Claims

1. Foundation for an offshore wind farm with at least one sea cable feedthrough, **characterised in that** the sea cable feedthrough is provided at a height h within a range of about 3.5 metres to about 5 metres over the sea bed (20).

2. Foundation according to claim 1, **characterised in that** the sea cable feedthrough is designed for inserting a sea cable (24) under an angle α of about 40° to the foundation from the side of the sea bed (20) diagonally upwards.

3. Foundation according to claim 1 or 2, **characterised in that**, in the foundation, an oval or oval shaped wall breakthrough (12) is provided for feeding through a sea cable (24).

4. Foundation according to claim 2, **characterised in that** a preferably round pipe (16) is fastened in the wall breakthrough (12).

5. Foundation according to claim 4, **characterised in that** the pipe (16) extends under an angle α within a range of about 30° to about 45°, preferably about 40°, to the foundation from the side of the sea bed (20) diagonally upwards through the wall breakthrough (12).

6. Foundation according to claim 4 or 5, **characterised in that** in the pipe's (16) opening (18), which is outside the foundation, a latching means for latching a sea cable insertion is provided.

7. Foundation according to claim 6, **characterised in that** the latching means has a circumferential inside groove (22).

8. Foundation according to one of the claims 5 to 7, **characterised in that** the pipe (16) consists of cast iron.

9. Foundation according to one of the preceding claims, **characterised in that** it is a monopile foundation.

10. Foundation according to one of the claims 1 to 8, **characterised in that** is a tripod or tripile foundation.

11. Foundation for an offshore wind farm with at least one sea cable feedthrough, according to one of the preceding claims, **characterised in that** the sea cable (24) within the foundation is laid using a strain relief clamp (30) in the upper area of the foundation and at least one sea cable holding clamp (44, 46, 48) in a mounting plate (38, 40, 42).

## Revendications

1. Fondation pour une installation à énergie éolienne offshore dotée d'au moins une traversée de câble sous-marin, **caractérisée en ce que** la traversée de câble sous-marin se trouve à une hauteur h dans la fourchette d'à peu près 3,5 à à peu près 5 m au dessus du fond marin (20).

2. Fondation selon la revendication 1, **caractérisée en ce que** la traversée de câble sous-marin est configurée obliquement vers le haut, pour introduire un câble sous-marin (24) sous un angle α d'à peu près 40° par rapport à la fondation, à partir du côté du fond marin (20).

3. Fondation selon la revendication 1 ou 2, **caractérisée en ce qu'**une ouverture de paroi (12), ovale ou du genre ovale, déterminée est prévue dans la fondation, pour permettre le passage d'un câble sous-marin (24).

4. Fondation selon la revendication 2, **caractérisée en ce qu'**un tube (16), de préférence rond, est fixé dans l'ouverture de paroi (12).

5. Fondation selon la revendication 4, **caractérisée en ce que** le tube (16) s'étend obliquement vers le haut, à travers l'ouverture de paroi (12), sous un angle α dans la fourchette comprise entre à peu près 30° jusqu'à à peu près 45°, de préférence d'à peu près 40°, par rapport à la fondation, à partir du côté du fond marin (20).

6. Fondation selon la revendication 4 ou 5, **caractérisée en ce qu'**un dispositif d'encliquetage, pour encliqueter une introduction de câble sous-marin, est prévu dans l'ouverture (18), se trouvant à l'extérieur de la fondation, du tube (16).

7. Fondation selon la revendication 6, **caractérisée en ce que** le dispositif d'encliquetage présente une gorge intérieure (22) faisant le pourtour.

8. Fondation selon l'une des revendications 5 à 7, **caractérisée en ce que** le tube (16) est composé de fonte de fer.

9. Fondation selon l'une des revendications précédentes, **caractérisée en ce qu'**elle est une fondation monopile.

10. Fondation selon l'une des revendications 1 à 8, **caractérisée en ce qu'**elle est une fondation tripode ou tripile.

11. Fondation pour une installation à énergie éolienne offshore dotée d'au moins une traversée de câble sous-marin, selon l'une quelconque des revendications précédentes, **caractérisé en ce que** le câble sous-marin (24) est posé à l'intérieur de la fondation, au moyen d'un dispositif de serrage pour soulagement de traction (30), disposé dans la zone supérieure de la fondation, et au moins un dispositif de maintien par serrage de câble sous-marin (44, 46, 48) dans une plaque de fixation (38, 40, 42).
